# EUROPÄISCHE PATENTSCHRIFT

(11) **EP 0 993 000 B1**
(45) Veröffentlichungstag und Bekanntmachung des Hinweises auf die Patenterteilung: **28.04.2004**
(21) Anmeldenummer: 99119357.4
(22) Anmeldetag: 29.09.1999
(51) Int. Cl.: G21C 9/016, G21C 5/10, G21C 11/08, G21C 9/00

(54) **Vorrichtung zum Kühlen und zum Schutz eines Reaktordruckbehälters bei Kernschmelzunfällen**
Apparatus for cooling and protecting a reactor pressure vessel in the event of a core melting accident
Dispositif pour le refrodissement et la protection d'une cuve de pression d'un réacteur nucléaire en cas de fusion du coeur

(30) Priorität: 07.10.1998 DE 19846057
(43) Veröffentlichungstag der Anmeldung: 12.04.2000
(60) Teilanmeldung: 02009648.3
(73) Patentinhaber: Forschungszentrum Jülich GmbH, 52425 Jülich (DE)
(72) Erfinder: von Lensa, Werner, Dr., 52379 Langerwehe (DE); Fröhling, Werner, Dr., 52351 Düren (DE); Kugeler, Kurt, Prof. Dr., 52428 Jülich (DE)
(74) Vertreter: COHAUSZ & FLORACK

(56) Entgegenhaltungen:
- WO-A-98/13832
- DE-A- 2 914 872
- DE-A- 3 938 111
- FR-A- 2 763 168
- GB-A- 1 117 265
- US-A- 3 203 867
- US-A- 3 935 063
- US-A- 4 116 764
- US-A- 4 310 385
- US-A- 4 412 969
- US-A- 5 343 506
- US-A- 5 465 278
- US-A- 5 465 280
- US-A- 5 699 394
- PATENT ABSTRACTS OF JAPAN vol. 1996, no. 07, 31. Juli 1996 (1996-07-31) & JP 08 075887 A (MITSUBISHI ATOM POWER IND INC)

## Beschreibung

Die Erfindung betrifft eine Vorrichtung zum Kühlen und zum Schutz eines Reaktordruckbehälters bei Kernschmelzunfällen.

Bei Kernkraftwerken (KKW) mit wassergekühlten Reaktorkernen kann bei Verlust der Kühlung bzw. bei Kühlmittelverlust-Störfällen (Loss-of-Coolant Accidents (LOCA)) wegen der durch die Nachwärme bedingten Aufheizung der Brennstäbe und durch die nachfolgende exotherme Oxidation der Brennstabhüllen sowie weiterer Strukturmaterialien des Reaktorkerns (Reaktorcores) ein partielles oder vollständiges Schmelzen von Brennstoff und Strukturmaterialien auftreten. Die dabei entstehende Kernschmelze wird sich - der Schwerkraft folgend - in den unteren Bereichen des Reaktordruckbehälters ansammeln.

Je nach Unfallablauf kann die Kernschmelze dabei auch explosionsartig mit dem Restwasser in der Bodenkalotte reagieren (Dampfexplosion). Dadurch kann die gesamte Integrität des Reaktordruckbehälters gefährdet werden. Folgeschäden am Reaktorsicherheitsbehälter mit Austritt von Radioaktivität sind unter diesen Bedingungen nicht mit letzter Sicherheit auszuschließen. Außerdem muß das Problem eventueller Rekritikalitäten der Kernschmelze beachtet werden.

Durch die extrem hohen Temperaturen im Bereich von über 2000°C und wegen der in dieser frühen Unfallphase noch relativ hohen Nachwärmeproduktion in der Größenordnung von ca. 50 MW bei großen Leistungsreaktoren kann die Bodenkalotte des Reaktordruckbehälters schmelzen und die Kernschmelze in die tiefer gelegenen Bereiche des Reaktorsicherheitsbehälters (Containments) austreten. Je nach Störfallszenario kann es dabei erneut zu Dampfexplosionen und final eventuell auch zum Durchschmelzen des Bodenfundaments kommen.

Vor diesem Hintergrund sind Maßnahmen zur Beherrschung der Kernschmelze entweder durch Vermeidung des Durchschmelzens des Reaktordruckbehälters oder durch spezielle Vorrichtungen zum Auffangen und Kühlen der Kernschmelze in sogenannten "Corecatchern" bei fortschrittlichen Reaktorsystemen vorgesehen. Dabei ist unbestritten, daß eine Beherrschung der Kernschmelze im Reaktordruckbehälter (In-Vessel Core Retention Strategy (IVCRS)) mit Erhalt der Integrität des Reaktordruckbehälters deutliche Vorteile hätte. Die Konsequenzen eines Kernschmelzunfalls würde sich dann auf die Unfallabläufe des Three-Miles-Island (TMI) Unfalls beschränken lassen, bei welchem es zu keinen Gefährdungen der Umgebung trotz weit fortgeschrittener Kernschmelze gekommen war. Allerdings zeigen die nachträglichen Untersuchungen, daß die Integrität des Reaktordruckbehälters nur durch die eingeleiteten Kühlmaßnahmen erhalten blieb.

Die gegenwärtig in Betrieb befindlichen Leichtwasser-Reaktoren (LWR) verfolgen eine Sicherheitsphilosophie, nach der durch zuverlässige redundante und z.T. diversitäre aktive Sicherheitssysteme das Eintreten der oben beschriebenen Störfälle extrem unwahrscheinlich ist und durch weitere Unfallbeherrschungsmaßnahmen (Accident Management (AM)) z.B. externe Wasser- / Stromversorgung der Störfallablauf beeinflußt und beherrscht werden kann. Vorrichtungen zum Auffangen und Kühlen der Kernschmelze bei derartigen hypothetischen Unfällen sind bislang nur in Einzelfällen z.B. beim Schnellen Brüter (SNR 300) in Kalkar realisiert worden.

Im Gegensatz zur Beherrschung der Kernschmelze im Reaktordruckbehälter wird bei den neuen Konzepten fortschrittlicher Leichtwasserreaktoren, z.B. der Europäische Druckwasser-Reaktor (EPR), ein Durchschmelzen des Reaktordruckbehälters hingenommen. Ein nachfolgender Kontakt der austretenden Kernschmelze mit Wasser wird zur Vermeidung von Ex-Vessel Dampfexplosionen konzeptionell verhindert. Erst nach Ausbreitung der Kernschmelze im Bereich des Corecatchers soll die Kernschmelze im Kontakt mit Wasser gekühlt werden, wobei erneut energetische Reaktionen von Schmelze und Wasser nicht vollständig auszuschließen sind.

Bei den existierenden Reaktoren - mit Ausnahme einiger Reaktoren russischer Bauart (WWER) mittlerer Leistung - ist eine Kühlung des Reaktordruckbehälters durch Flutung der Reaktorkaverne (Pit-Flooding) nicht vorgesehen und nachträglich wegen der notwendigen Wassermengen, Wassereintritts- und Dampfaustrittsöffnungen im Bereich der Reaktorkaverne und Behälterisolation auch kaum realisierbar. Neuere Konzepte von Reaktoren mittlerer Leistungsgröße mit verstärkter Nutzung passiver Sicherheitseinrichtungen, z.B. AP-600 von Westinghouse, USA, sehen dagegen bei schweren Störfällen mit Auftreten von Kernschmelzen eine schnelle Druckentlastung des Primärkreises und die Flutung der gesamten Reaktorkaverne vor, um damit eine effektive Außenkühlung des Reaktordruckbehälters zu gewährleisten.

Die Wärmestromdichten an der Außenoberfläche des Reaktordruckbehälters können - speziell bei höheren Reaktorleistungen - dabei jedoch so hoch sein, daß nach anfänglichem konvektiven Wärmeübergang mit Blasensieden ein Umschlag zum Filmsieden nicht ausgeschlossen werden kann. Dies hätte jedoch eine deutliche Erhöhung des Wärmeübergangswiderstandes mit nachfolgendem Schmelzen des Reaktordruckbehälters zur Folge.

Die US 4,116,764 offenbart eine Vorrichtung, die im Bodenbereich eines Reaktordruckbehälters angeordnet ist und dazu dient, Teile einer im Falle eines Unfalls entstehenden Kernschmelze aufzufangen und zu kühlen. Die Vorrichtung besteht aus parallel zueinander angeordneten horizontalen Platten, die Öffnungen aufweisen, durch die die Schmelze hindurchtreten kann. Oberhalb und beabstandet zu der Vorrichtung ist eine Kerntragplatte angeordnet, auf der sich der eigentliche Reaktorkern befindet. Somit ist zwischen der Vorrichtung und der Kerntragplatte ein großes freies Volumen, in dem sich bei Kontakt zwischen Kernschmelze und Kühlmittel eine Dampfexplosion ausbreiten kann. Daneben ist eine derartige Vorrichtung nicht geeignet, die bei einer vollständigen Schmelze des Kerns entstehende Wärme in der Weise aufzunehmen, daß ein Durchschmelzen des Druckbehälters verhindert wird.

In der US 5,465,280 wird eine Vorrichtung im Boden eines Reaktordruckbehälters offenbart, mit der im Falle eines Unfalles die Kernschmelze aufgefangen wird und die Wärme kontrolliert nach außen abgegeben wird. Diese Vorrichtung dient nur dazu, die Schmelze selbst aufzufangen, wobei sich zwischen der Vorrichtung und dem Reaktorkern ein freies Volumen befindet, so daß die Problematik einer möglichen Dampfexplosion dabei nicht berücksichtigt wird.

Durch die US 4,412,969 wird eine im Boden eines Reaktordruckbehälters angeordnete Vorrichtung offenbart, mit der über mehrere Leitungen einströmendes Kühlwasser über den Querschnitt des Druckbehälters verteilt wird. Dabei soll sichergestellt werden, daß im Falle des Bruchs einer der Leitungen nicht Kühlwasser genau durch diese Leitung aus dem Druckbehälter herausströmt und die Kühlung des Reaktorkerns verschlechtert wird. Die Oberfläche der Vorrichtung dient gleichzeitig das Auffangfläche für im Fall einer Kernschmelze herabfallende Schmelzestücke. Auch hier ist die Vorrichtung beabstandet zu dem Reaktorkern angeordnet, so daß ein großer Freiraum bleibt, in dem sich eine Dampfexplosion ausbreiten kann.

In der DE 29 14 872 wird eine Wanne offenbart, die eine wabenförmige Struktur aufweist und dazu dient, im Falle einer Kernschmelze herabtropfendes Material aufzunehmen und eine Durchschmelzen des Reaktordruckbehälters zu verhindern. Dabei ist die Wanne aus Uranoxid und ferner mit einem Kühlsystem versehen. Die Problematik des hohen Drucks, der infolge einer Dampfexplosion entstehen kann, wird auch hier nicht berücksichtigt.

Der vorliegenden Erfindung liegt ausgehend vom Stand der Technik das technische Problem zugrunde, eine Vorrichtung für einen Reaktordruckbehälter eines wassergekühlten Kernreaktors bereitzustellen, durch die im Falle von Kernschmelzeunfällen die Kernschmelze innerhalb des Reaktordruckbehälters unter Vermeidung von Dampfexplosionen stabilisiert werden kann und nachfolgend ein Durchschmelzen der Bodenkalotte des Reaktordruckbehälters sowie weitere Folgeschäden verhindert werden.

Das zuvor aufgezeigte technische Problem wird durch eine Vorrichtung zum Kühlen eines Reaktordruckbehälters nach Anspruch 1 bzw. gelöst.

Erfindungsgemäß ist erkannt worden, daß die aufgrund der Schwerkraft nach unten unter die Kerntragplatte gelangende Kernschmelze durch die Vorrichtung zum Aufteilen des Volumens in den einzelnen Teilvolumina aufgeteilt und somit zumindest teilweise voneinander getrennt ist. Somit kommt die Kernschmelze mit einer größeren Fläche in Kontakt, die vom Material der Vorrichtung zum Aufteilen des Volumens gebildet wird. Dadurch wird erreicht, daß die von der Kernschmelze erzeugte Wärme stärker abgeleitet werden kann, da insgesamt eine größere Wärmekapazität zur Aufnahme von Wärmeenergie zur Verfügung steht.

Dadurch, dass das Volumen unterhalb der Kerntragfläche in Teilvolumina aufgeteilt ist, kann wirksam verhindert werden, dass herabfallende Teile einer Kernschmelze zu einer großräumigen Dampfexplosion führen können, wodurch die Integrität des Reaktordruckbehälters gefährdet wäre. Dieses ist insbesondere deswegen gewährleistet, weil das Volumen unterhalb der Kerntragplatte im wesentlichen vollständig in kleinere Teilvolumina aufgeteilt ist. Wenn eine Dampfexplosion dennoch stattfindet, ist sie räumlich begrenzt und führt nicht zu großen Schäden.

Die Kammern bilden dann die Teilvolumina, in die, vorzugsweise von unten, das Kühlmittel bzw. das Kühlwasser durch eine ebenfalls segmentierte sternförmige Einströmvorrichtung eintreten kann. Dabei weist der wabenförmige Einbau Verbindungsöffnungen in den Zwischenwänden auf, die vorzugsweise horizontal versetzt zueinander angeordnet sind. Somit kommt es zu einer gleichmäßigen Verteilung des Kühlmittels zwischen den Kammern, wobei die Ausbreitung der Dampfexplosionen in horizontaler Richtung verhindert wird.

Bei der Ausgestaltung der Vorrichtung zum Aufteilen des Volumens ist innerhalb der Außenwand der Vorrichtung eine Mehrzahl von Schüttkörpern vorgesehen, die vorzugsweise aus einem keramischen oder einem metallischen Material bestehen und als Kugeln oder als durchbohrte Polyeder ausgebildet sind. Die angeordneten Schüttkörper bilden jeweils Zwischenräume zwischen sich aus, die von der Kernschmelze zumindest teilweise ausgefüllt werden. Gleichzeitig kann die Kühlflüssigkeit, ebenfalls vorzugsweise von unten, über die segmentierte Einströmvorrichtung in die Teilvolumina eintreten.

Weiterhin können die Kammern des wabenförmigen Einbaus mit den Schüttkörpern zumindest teilweise ausgefüllt sein, so daß beide zuvor beschriebenen Effekte miteinander kombiniert werden.

In bevorzugter Weise ist eine Isolierungsschicht an der Innenwand des Reaktordruckbehälters angeordnet, die sich vorzugsweise zumindest über den Bereich unterhalb der Kerntragplatte erstreckt. Weiterhin ist die Isolierungsschicht mit einem vorgegebenen Abstand zur Innenwand des Reaktordruckbehälters angeordnet und bildet einen im wesentlichen durchgängigen Strömungsspalt. Des weiteren weist die Isolierungsschicht Öffnungen und/oder poröse Strukturen zum Durchtreten einer Flüssigkeit auf. Dadurch wird insgesamt gewährleistet, daß zur Durchführung von Unfallbeherrschungsmaßnahmen eine Kühlung der Isolieningsschicht und eine dosierte Kühlmitteleinströmung ermöglicht ist.

Schließlich ist es vorgesehen, daß die Vorrichtung zum Aufteilen des Volumens und/oder die Isolierungsschicht einen axialen, radialen oder segmentartigen modularen Aufbau aufweist. Dieses erleichtert den Einbau und die Wartung der Elemente und ermöglicht darüber hinaus den Einbau in bereits bestehende Reaktordruckbehälter.

Als Materialien für die Vorrichtung zum Aufteilen des Volumens und/oder der Isolierungsschicht kommen Metalle und Keramiken in Frage, die in ausreichendem Maße temperaturstabil und strahlungsfest sind. In bevorzugter Weise weisen diese Materialien zusätzlich Absorbermaterial für Neutronenstrahlung auf, um eine weitere Kernreaktion innerhalb der Kernschmelze zu vermindern oder ganz zu unterbinden. Somit lassen sich auch nach einer Kernschmelze Rekritikalitäten verhindern, wodurch sich eine zusätzliche Sicherheit des Reaktordruckbehälters ergibt.

Durch Einbauten im Bodenbereich des Reaktordruckbehälters, die die Kernschmelze auf kleinere Volumina verteilen, lassen sich größere Dampfexplosionen im Reaktordruckbehälter vermeiden. Eine Isolierung des Reaktordruckbehälters mit der Möglichkeit einer Hinterströmung mit Kühlwasser vermindert die Wärmebelastung der Wandung des Reaktordruckbehälters und erleichtert eventuelle Unfallbeherrschungsmaßnahmen. Derartige Modifikationen der Einbauten sind insbesondere bei Druckwasser-Reaktoren (DWR) auch nachträglich realisierbar, da bei dieser Bauart sämtliche Einbauten z.B. bei Inspektionen ausgebaut werden und ein Austausch gegen neuartige Einrichtungen damit grundsätzlich möglich wäre.

Die Einbauten wirken sich selbst nach Aufschmelzen positiv für die Beherrschung des Unfalls aus, da durch das vergrößerte Volumen der Schmelze die Wärmeübertragungsfläche vergrößert und die Temperatur des Schmelzegemisches abgesenkt wird, weil die zum Schmelzen der Einbauten erforderliche Wärmemenge der Kernschmelze entzogen wird. Der damit verbundene Zeitgewinn führt zu einer Absenkung der Temperaturbelastungen wegen der im Laufe der Zeit abnehmenden Nachwärmeproduktion.

Aufgrund der beschriebenen Vorrichtungen ist eine vollständige Flutung der Reaktorkaverne nicht erforderlich. Die außerhalb des Reaktordruckbehälters angeordnete Kühleinrichtung kann im Normalbetrieb auch die Funktion einer Behälterisolierung übernehmen.

Die beschriebenen Vorrichtungen eignen sich nach entsprechender Qualifikation und Anpassung an die konstruktiven Gegebenheiten grundsätzlich sowohl für existierende als auch für zukünftige Kernkraftwerke mit wassergekühlten Reaktorkernen.
Weitere Merkmale und Vorteile der vorliegenden Erfindung werden in der folgenden Beschreibung verschiedener Ausführungsbeispiele näher erläutert, wobei auf die Zeichnung Bezug genommen wird. In der Zeichnung zeigen
- Fig. 1: eine erfindungsgemäße Vorrichtung zum Kühlen eines Reaktordruckbehälters mit einem ersten Ausführungsbeispiel einer Vorrichtung zum Aufteilen des Volumens,
- Fig. 2: eine erfindungsgemäße Vorrichtung zum Kühlen eines Reaktordruckbehälters mit einem zweiten Ausführungsbeispiel einer Vorrichtung zum Aufteilen des Volumens,
- Fig. 3: den Reaktordruckbehälter im Bereich der Einströmvorrichtung im Schnitt entlang der Linie III-III in Fig. 1 und 2,
- Fig. 4: eine erfindungsgemäße Vorrichtung zum Kühlen eines Reaktordruckbehälters mit zwei Ausführungsbeispielen einer den Reaktordruckbehälter umgebenden Kühlvorrichtung und
- Fig. 5: eine Darstellung der Verhältnisse bei Kernschmelze bei einem Reaktorsicherheitsbehälter aus dem Stand der Technik.

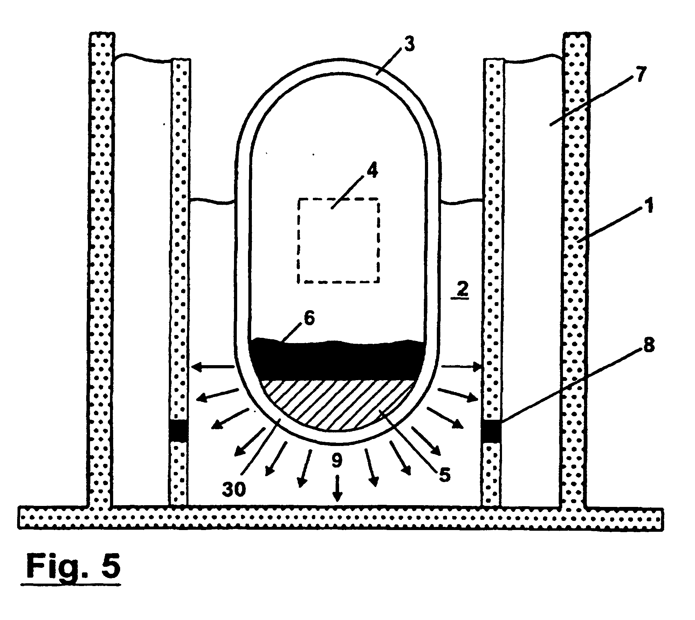

Die Fig. 5 zeigt schematisch die Verhältnisse innerhalb eines aus dem Stand der Technik bekannten Reaktorsicherheitsbehälters 1, der für eine Flutung der gesamten Reaktorkaverne 2 ausgelegt ist, in der sich auch der Reaktordruckbehälter 3 mit dem Reaktorkern 4 befindet. In einem Kühlmittelverluststörfall (LOCA) oder bei Ausfall der Nachwärmeabfuhr kann es zur Verlagerung der geschmolzenen Kernbestandteile in die Bodenkalotte 30 des Reaktordruckbehälters 3 kommen, wobei sich eine metallische Schmelzphase 5 im unteren Bereich sowie darüber eine oxidische Phase 6 in Abhängigkeit von den Temperaturen und Konvektionsvorgängen in der Kernschmelze ausbilden.

Zur Flutung der Reaktorkaverne nach Eintritt der Kernschmelze sind große Wassermengen 7 vorzuhalten oder einzubringen, die z.B. über eine Schmelzsicherung 8 in die Reaktorkaverne 2 eingelassen werden, noch bevor es zur Beschädigung des Reaktordruckbehälters 3 kommen kann. Die Pfeile 9 symbolisieren die hohen Wärmestromdichten an der Oberfläche des Reaktordruckbehälters 3, die zur Kühlung und damit zum Erhalt der Integrität der Bodenkalotte 30 bewältigt werden müssen.

Bei der dargestellten und in ähnlicher Form bei fortschrittlichen Leichtwasserreaktoren angewandten Ausführung kann es jedoch schon bei Verlagerung der Kernschmelze zu Dampfexplosionen im Reaktordruckbehälter 3 (in-vessel) kommen, welche die Integrität des Reaktordruckbehälters 3 gefährden können.

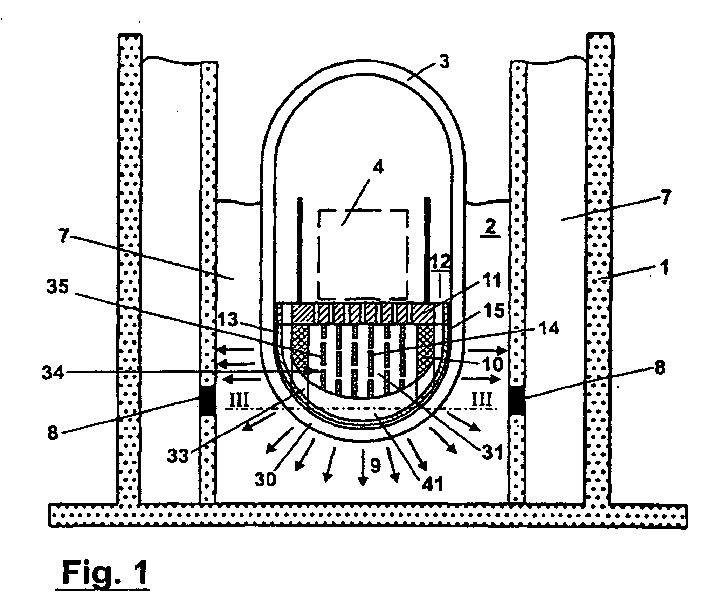

In Fig. 1 ist eine erste erfindungsgemäße Ausgestaltung einer Vorrichtung zum Kühlen eines Reaktordruckbehälters 3 dargestellt, die eine Kerntragplatte 11, die einen Reaktorkern 4 innerhalb des Reaktordruckbehälters 3 trägt, und eine Vorrichtung zum Aufteilen des Volumens unterhalb der Kerntragplatte 11 in eine Mehrzahl von Teilvolumina aufweist.

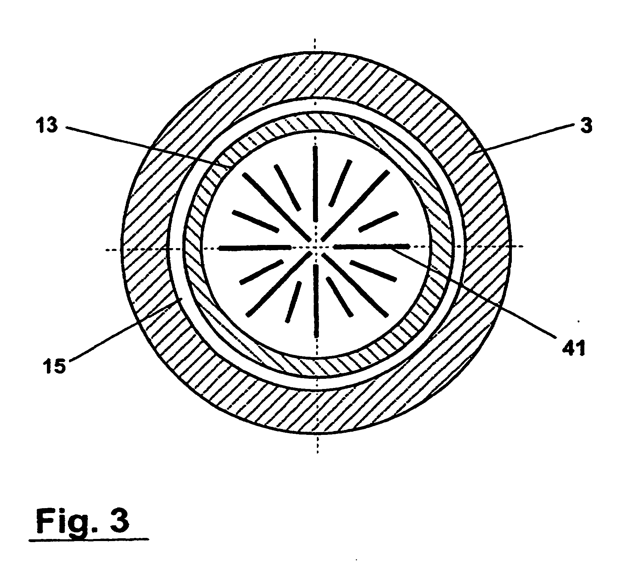

Die Vorrichtung zum Aufteilen des Volumens weist eine im wesentlichen zylindrische Außenwand 10 auf und die Außenwand 10 trägt die Kerntragplatte 11 von unten und ist an der Innenwand der Bodenkalotte 30 des Reaktordruckbehälters 3 abgestützt. Die Außenwand 10 weist weiterhin mindestens eine Öffnung 33 für den Durchtritt eines Kühlmittels in eine Einströmvorrichtung 41 auf, welche - wie in Fig. 3 dargestellt - durch geeignete azimutale Segmentierung auch im Einströmbereich das Volumen des Restwassers auf kleinere Teilmengen begrenzt.

Des weiteren weist die Vorrichtung zum Aufteilen des Volumens innerhalb der Außenwand 10 einen wabenförmigen Einbau 34 auf, der im wesentlichen senkrecht verlaufende, Kammern 31 bildende Zwischenwände 35 aufweist. Der wabenförmige Einbau 34 übernimmt gleichzeitig die Funktion eines Kerntragschemels und einer notwendigen Strömungsvergleichmäßigung für das in den Reaktorkern bei Normalbetrieb eintretende Kühlwasser 12. Der wabenförmige Einbau 34 stützt sich am Boden des Reaktordruckbehälters 3 oder auf der ebenfalls vorgesehenen Isolierung 13 der Bodenkalotte 30 ab. Darüber hinaus weist der wabenförmige Einbau 34 am unteren Ende Durchtrittsöffnungen für eine Kühlflüssigkeit auf, damit eine gleichmäßige Durchströmung aller Kammern 31 ermöglicht wird. Wie der in Fig. 3 dargestellte Querschnitt zeigt, wird das Kühlmittel über eine vorzugsweise sternförmig azimutal segmentierte Einströmvorrichtung 41 zugeführt, um größere Wasseransammlungen und dadurch hervorgerufene Dampfexplosionen in diesem Bereich zu verhindern.

Die Kammern 31 des wabenförmigen Einbaus 34 verhindern eine horizontale Ausbreitung vom Druckwellen und damit von größeren Dampfexplosionen, wenn es bei Eintritt der Kernschmelze in einzelne Kammern 31 doch zu lokalen Dampfexplosionen in den einzelnen Kammern 31 kommt. Versetzte Verbindungsöffnungen 14 zwischen den Kammern 31 sind darüber hinaus für eine weitere Vergleichmäßigung der Einströmung des Kühlwassers im Normalbetrieb vorgesehen. Die Verbindungsöffnungen 14 sind aber so angeordnet und bemessen, daß es durch die Verbindungsöffnungen 14 nicht zu einer schädlichen lateralen Propagation von Druckwellen kommt.

Weiterhin ist eine Isolierungsschicht 13 zumindest im Bereich unterhalb der Kerntragplatte 11 an der Innenwand des Reaktordruckbehälters 3 angeordnet, die mit einem vorgegebenen Abstand zur Innenwand des Reaktordruckbehälters 3 angeordnet ist und einen im wesentlichen durchgängigen Strömungsspalt 15 bildet. Weiterhin weist die Isolierungsschicht 13 Öffnungen und/oder poröse Strukturen zum Durchtreten einer Flüssigkeit auf.

Die hochtemperaturfeste Isolierungsschicht 13 führt zu einem kontrollierten Wärmefluß von der Kernschmelze zur Wandung des Reaktordruckbehälters 3 und verhindert zudem lokale Überhitzungen, wobei die Öffnungen und/oder poröse Strukturen in der Isolierungsschicht bei Unfallbeherrschungsmaßnahmen eine Kühlung der Isolierungsschicht 13 und dosierte Wassereinströmungen in die Kernschmelze erlauben.

Die Wärmekapazität der erfindungsgemäßen Vorrichtung zum Aufteilen des Volumens senkt die Temperatur in der Kernschmelze während des Eintritts kurzfristig ab und führt zu einem Zeitgewinn im Hinblick auf die ebenfalls zeitlich abnehmende Nachwärmeproduktion. Das zusätzliche Volumen der Einbauten 10 sowie der Isolierungsschicht 13 erhöhen zudem selbst nach Aufschmelzen dieser Einbauten den Füllstand der Schmelze in der Bodenkalotte und damit die Wärmeübergangsflächen an der Außenseite des Reaktordruckbehälters 3.

Für mittlere Leistungsgrößen kann dieser Effekt zusammen mit der zuvor beschriebenen vergrößerten Wärmeübergangsfläche bereits ausreichend sein, um die Wärmestromdichte auf der Außenseite des Reaktordruckbehälters 3 hinreichend abzusenken und Unfallbeherrschungsmaßnahmen durch ein Fluten der Reaktorkaverne wirkungsvoll zu unterstützen.

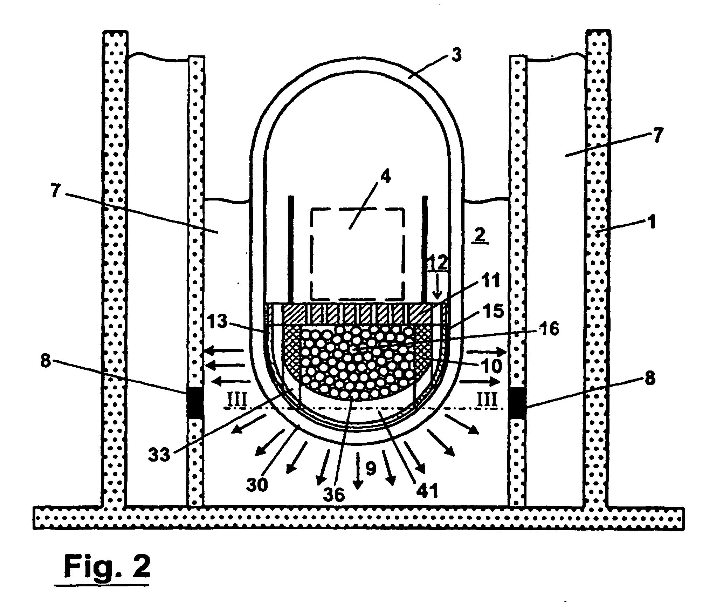

In Fig. 2 ist ein weiteres Ausführungsbeispiel der vorliegenden Erfindung dargestellt. Anstelle des wabenförmigen Einbaus 34 ist eine Schüttung von keramischen oder metallischen Schüttkörpern 16 wie z.B. Kugeln oder durchbohrte Polyeder vorgesehen, die ebenfalls eine Vergleichmäßigung der Strömung und eine Unterbindung großvolumiger Dampfexplosionen bewirken. Weiterhin ist ein am unteren Ende der Außenwand 10 befestigtes gitterförmiges Element 36 vorgesehen, das die Schüttkörper 16 von der Innenwand der Bodenkalotte 30 beabstandet hält. Das gitterförmige Element 36 ist dabei als Netz oder als Gitter mit einer Maschenweite ausgebildet, die geringer als der Durchmesser der Schüttkörper 16 ist. Somit ist ein Eindringen von Kühlmittel von unten möglich. Alternativ kann der Abstand der Strömungsführungswände in der Einströmvorrichtung 41 so gewählt werden, daß er kleiner als der Durchmesser der Schüttkörper 16 ist, um ein Verstopfen der Einströmkanäle zu vermeiden.

Bei entsprechender Materialwahl kann auch die Isolierschicht 13 ganz oder teilweise sowie der Kühlspalt 15 in Form von Schüttungen aus Schüttkörpern 16 ausgebildet sein, da die Schüttkörper auch eine hinreichende Porosität für die Hinterströmung mit Kühlwasser bei Unfallbeherrschungsmaßnahmen sowie mechanische Stabilität bieten.

Weiterhin lassen sich auch die wabenförmigen Einbauten 34 ganz oder teilweise mit Schüttungen keramischer oder metallischer Schüttkörper 16 auffüllen, um die Gefahr von Dampfexplosionen weiter zu reduzieren und das Strömungsbild zu vergleichmäßigen.

Zur besseren Handhabung können die Wandung 10 und der wabenförmige Einbau 34 sowie ggf. auch inklusive der Isolierungsschicht 13 axial, radial oder segmentartig modular aufgebaut sein. Dies erleichtert den Ein- und Ausbau sowie die Inspektion dieser Einbauten. Als Material für diese Einbauten kommen Metalle in Schweiß- oder Gußausführung oder aber auch Keramiken in Betracht, welche unter den hohen Betriebsdrükken und eventuellen Druck- bzw. Temperaturtransienten stabil sind.

Da im Falle einer Kernschmelze die Wandung 10 und der wabenförmige Einbau 34 sowie die Isolierungsschicht 13 im direkten Kontakt mit der Kernschmelze stehen, ergibt sich ein weiterer Vorteil dadurch, daß die Materialien zusätzlich ein Absorbermaterial für Neutronenstrahlung aufweisen. Somit kann in wirkungsvoller Weise eine weitere Kernreaktion unterbunden werden, so daß die von der Kernschmelze erzeugte Wärmeleistung auf die Nachwärme beschränkt bleibt, welche im folgenden Zeitverlauf abnimmt.

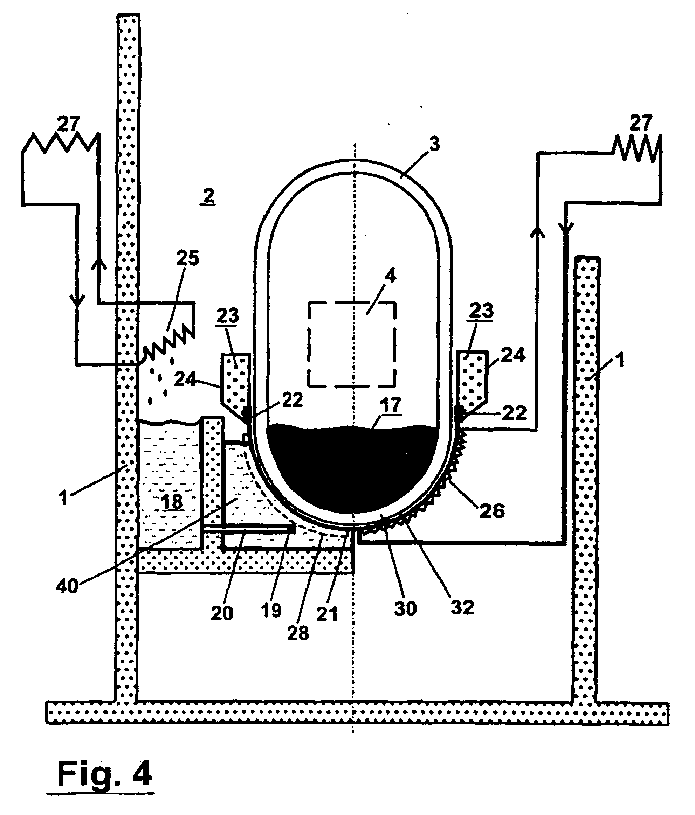

Fig. 4 zeigt zwei Ausführungsbeispiele von außen am Reaktordruckbehälter 3 angebrachten Vorrichtungen zur effektiven Abfuhr der von der Schmelze auf den Reaktordruckbehälter 3 übertragenen Wärmeenergie. Vereinfachend ist dargestellt, daß sich - mit oder ohne Verwendung der in den Fign. 1 und 2 dargestellten inneren Einbauten 10 und 34 oder der Schüttkörper 16 bzw. der Isolierung 13 - im Inneren des Reaktordruckbehälters 3 bereits eine Kernschmelze 17 im Bereich der Bodenkalotte 30 ausgebildet hat.

In Fig. 4 links der Symetrieachse ist eine Kühlvorrichtung dargestellt, die von innerhalb oder außerhalb der Reaktorkaverne 2 liegenden Wasservorratsbehältern 18 bespeist wird. Redundant zu aktiv ausgelösten Einspeisungen ist - in Analogie zur Schmelzsicherung 8 in Fig. 1 - ebenfalls eine Schmelzsicherung 19 am Ende des Zuführungsrohres 20 vorgesehen, welche bei einer Erhöhung der Temperatur des Reaktordruckbehälters 3 anspricht und die Zufuhr von Kühlwasser in die Kühlvorrichtung in Gang setzt.

Die Kühlvorrichtung besteht aus einer Wandung 21, die den Reaktordruckbehälter 3 mit geringem Abstand bis über die zu erwartende maximale Höhe der Kernschmelze 17 umschließt. Die Wandung 21 dient zusammen mit dem Zwischenraum 32 im Normalbetrieb als Isolierung des Reaktordruckbehälters 3. Im Fall einer Kernschmelze bewirken Schmelzsicherung 22 oder ein anderer Auslösungsmechanismus das Einrieseln von - bei niedrigeren Temperaturen - schmelzfähigem Granulat 23 in den Zwischenraum 32 zwischen dem Reaktordruckbehälter 3 und der Wandung 21, sofern nicht schon direkt im Behälter 24 eine Metallschmelze durch die dort herrschenden Temperaturen erzeugt wird. Alternativ können im Behälter 24 auch andere - strahlungsresistente - feste oder flüssige Wärmeträger (z.B. Wärmeöle, Paraphine, Salze) vorgehalten werden. Weiterhin sind zusätzlich in dem Zwischenraum 32 Materialien (z.B. Fasern, Bleche etc.) angeordnet.

Das flüssige Metall, z.B. Blei-/Zinnlegierungen mit oder ohne Zusätzen zur Verbesserung der Fließeigenschaften oder zur Beseitigung von Verzunderungen der zu kühlenden Oberfläche der Reaktordruckbehälters, stellt eine extrem gut wärmeleitende Verbindung zwischen dem Reaktordruckbehälter 3 und der Wandung 21 der Kühlvorrichtung dar und hebt die isolierende Wirkung der sich in diesem Bereich aus betrieblichen Gründen befindlichen Isoliermaterialien auf, z.B. dadurch, daß das flüssige Metall die Faser- oder Folienpakkungen durchdringt.

Die Wärmeübertragung von der Wandung 21 an das Kühlwasser wird auf bekannte Weise z.B. durch Kühlrippen 28 oder durch Ausbildung der Wandung 21 als gewellte Oberfläche gegenüber einer direkten Kühlung des Reaktordruckbehälters 3 erheblich verbessert.

Die Wandung 21 kann auch in einer Weise gekühlt werden, daß sich nach dem Verfüllen des Zwischenraums 32 mit flüssigem Metall und danach einsetzender Kühlung an den Kühlflächen dünne, feste Ablagerungen des metallischen Wärmeträgers 23 bilden, die eventuelle Risse in der Wandung 21 oder der Wand des Reaktordruckbehälters 3 selbsttätig verschließen. Wegen des höheren spezifischen Gewichts eines metallischen Wärmeträgers kann es zudem auch nicht zu Übertritten von Kühlwasser in diesen Spalt kommen. Der Wasserstand im Vorratsbehälter 18 kann daher auch im Verhältnis der Produkte der spezifischen Gewichte und des Füllstandes von Kühlwasser und dem des spezifischen Gewichts des verwendeten Wärmeträgers mit seinem Füllstand im Übertragungsspalt entsprechend erhöht werden.

Das Wasserbecken läßt sich durch Kühler 25 über dem Vorratsbecken in bekannter Weise durch Kondensation des Wasserdampfes in der Containment-Atmosphäre auffüllen, so daß eine langfristige Kühlung der Kernschmelze sichergestellt werden kann. Grundsätzlich kann über das Zuführungsrohr 20 auch eine gedrosselte Zufuhr von Kühlwasser in der Größenordnung der zu erwartenden Verdampfungsraten erfolgen.

Auf der rechten Seite zeigt die Fig. 4 eine Ausführung mit deutlich verringertem Bauvolumen. Anstelle eines größeren Kühlwasservolumens ist hier entweder nur ein schmalerer Kühlwasser-Behälter oder - wie dargestellt - ein Kühlsystem mit Kühlrohren 26 vorgesehen, die direkt mit der Wandung 21 im Wärmeaustausch stehen. Ein derartiges Kühlsystem kann z.B. im Naturumlauf mit höhergelegenen Wärmetauschern 27 oder im Zwangsumlauf in einer Weise betrieben werden, daß ein Filmsieden im Wärmeübertragungsbereich nicht auftritt und die Nachwärme ohne Zerstörung der Bodenkalotte durch Überhitzung abgeführt werden kann. Diese Ausführung hat den Vorteil, daß sie modular als Funktionseinheit ausgeführt und ähnlich wie die vorhandenen Isolierungen befestigt bzw. ausgetauscht werden kann. Damit wäre diese Bauausführung prinzipiell auch für die Nachrüstung bestehender Reaktoren geeignet.

Selbstverständlich kann die beschriebene Notkühlung auch für andere - nicht nukleare - Anwendungsfälle (z.B. in Chemie, Metallverhüttung, Verfahrenstechnik) benutzt werden, um Überhitzungen von Druck- oder anderen Behältern bei Störfällen zu vermeiden.

Außerdem läßt sich das Grundprinzip der verbesserten Wärmeabfuhr auch auf andere Bauweisen von Reaktordruckbehältern bzw. allgemeinen Druckbehältern wie z.B. vorgespannte Guß-Druckbehälter (VGD) übertragen. Bei diesen Guß-Druckbehältern wird die innen befindliche Dichthaut (Liner) direkt von den beschriebenen Wärmeträgermedien gekühlt und die Wärme erfindungsgemäß auf die Tragstrukturen oder spezielle Kühlsysteme übertragen.

### Bezugszeichenliste

- 1: Reaktorsicherheitsbehälter
- 2: Raktorkaverne
- 3: Raktordruckbehälter
- 4: Reaktorkern
- 5: metallische Schmelzphase
- 6: oxidische Phase
- 7: Wasser
- 8: Schmelzsicherung
- 9: Wärmestrahlung
- 10: Außenwand
- 11: Kerntragplatte
- 12: Kühlwasser
- 13: Isolierungsschicht
- 14: Verbindungsöffnung
- 15: Strömungsspalt
- 16: Schüttkörper
- 17: Kernschmelze
- 18: Wasservorratsbehälter
- 19: Schmelzsicherung
- 20: Zuführungsrohr
- 21: Wandung
- 22: Schmelzsicherung
- 23: Wärmeträger
- 24: Behälter
- 25: Kühler
- 26: Kühlrohr
- 30: Bodenkalotte
- 31: Kammer
- 32: Zwischenraum
- 33: Öffnung in 10
- 34: wabenförmiger Einbau
- 35: Zwischenwände
- 36: Gitter
- 40: Kühlmittelbecken
- 41: Einströmvorrichtung

## Patentansprüche

1. Vorrichtung zum Kühlen eines Reaktordruckbehälters (3),
- mit einer Kerntragplatte (11), die einen Reaktorkern (4) innerhalb des Reaktordruckbehälters (3) trägt, und
- mit einer Vorrichtung (34, 41) zum Aufteilen des Volumens unterhalb der Kerntragplatte (11) in eine Mehrzahl von Teilvolumina,
- wobei die Vorrichtung zum Aufteilen des Volumens eine im wesentlichen zylindrische Außenwand (10) aufweist und
- wobei die Außenwand (10) mindestens eine Öffnung (33) für den Durchtritt eines Kühlmittels aufweist,
- **dadurch gekennzeichnet,**
- **daß** die Vorrichtung zum Aufteilen des Volumens innerhalb der Außenwand (10) einen wabenförmigen Einbau (34) aufweist, der im wesentlichen senkrecht verlaufende, Kammern (31) bildende Zwischenwände (35) aufweist.

2. Vorrichtung nach Anspruch 1,
**dadurch gekennzeichnet,**
**daß** die Außenwand (10) die Kerntragplatte (11) von unten trägt und an der Innenwand der Bodenkalotte (30) des Reaktordruckbehälters abgestützt ist.

3. Vorrichtung nach Anspruch 1 oder 2,
**dadurch gekennzeichnet,**
**daß** eine Einströmvorrichtung (41) am unteren Ende der Vorrichtung zum Aufteilen des Volumens vorgesehen ist und das Kühlwasser im Einströmbereich auf eine Vielzahl von Teilvolumina aufteilt.

4. Vorrichtung nach Anspruch 1 bis 3,
**dadurch gekennzeichnet,**
**daß** der wabenförmige Einbau (34), insbesondere am unteren Ende, Durchtrittsöffnungen für eine Kühlflüssigkeit aufweist.

5. Vorrichtung nach Anspruch 4,
**dadurch gekennzeichnet,**
**daß** der wabenförmige Einbau (34) Verbindungsöffnungen (14) in den Zwischenwänden (35) aufweist, die vorzugsweise horizontal versetzt zueinander angeordnet sind.

6. Vorrichtung nach Anspruch 4 oder 5,
**dadurch gekennzeichnet,**
**daß** die Kammern (31) des wabenförmigen Einbaus (34) mit Schüttkörpern (16) zumindest teilweise ausgefüllt sind.

7. Vorrichtung zum Kühlen eines Reaktordruckbehälters (3),
- mit einer Kerntragplatte (11), die einen Reaktorkern (4) innerhalb des Reaktordruckbehälters (3) trägt, und
- mit einer Vorrichtung (16) zum Aufteilen des Volumens unterhalb der Kerntragplatte (11) in eine Mehrzahl von Teilvolumina,
- wobei die Vorrichtung zum Aufteilen des Volumens eine im wesentlichen zylindrische Außenwand (10) aufweist und
- wobei die Außenwand (10) mindestens eine Öffnung für den Durchtritt eines Kühlmittels aufweist,
- **dadurch gekennzeichnet,**
- **daß** die Vorrichtung zum Aufteilen des Volumens innerhalb der Außenwand (10) eine Mehrzahl von Schüttkörpern (16) aufweist.

8. Vorrichtung nach Anspruch 7,
**dadurch gekennzeichnet,**
**daß** ein am unteren Ende der Vorrichtung zum Aufteilen des Volumens befestigtes gitterförmiges Element (36) die Schüttkörper (16) von der Innenwand der Bodenkalotte (30) beabstandet hält.

9. Vorrichtung nach Anspruch 7 oder 8,
**dadurch gekennzeichnet,**
**daß** die Schüttkörper (16) aus einem keramischen oder metallischen Material bestehen und vorzugsweise aus Kugeln oder als durchbohrte Polyeder ausgebildet sind.

10. Vorrichtung nach einem der Ansprüche 1 bis 9,
**dadurch gekennzeichnet,**
**daß** eine Isolierungsschicht (13) zumindest im Bereich unterhalb der Kerntragplatte (11) an der Innenwand des Reaktordruckbehälters (3) angeordnet ist.

11. Vorrichtung nach Anspruch 10, **dadurch gekennzeichnet, daß** die Isolierungsschicht (13) mit einem vorgegebenen Abstand zur Innenwand des Reaktordruckbehälters (3) angeordnet ist und einen im wesentlichen durchgängigen Strömungsspalt (15) bildet.

12. Vorrichtung nach Anspruch 10 oder 11,
**dadurch gekennzeichnet,**
**daß** die Isolierungsschicht (13) Öffnungen und/oder poröse Strukturen zum Durchtreten einer Kühlflüssigkeit aufweist.

13. Vorrichtung nach einem der Ansprüche 10 bis 12,
**dadurch gekennzeichnet,**
**daß** die Isolierungsschicht (13) zumindest teilweise aus einer Schüttung von Schüttkörpern (16) besteht.

14. Vorrichtung nach einem der Ansprüche 1 bis 13,
**dadurch gekennzeichnet,**
**daß** die Vorrichtung zum Aufteilen des Volumens und/oder die Isolierungsschicht (13) einen axialen, radialen oder segmentartigen modularen Aufbau aufweist.

15. Vorrichtung nach einem der Ansprüche 1 bis 14,
**dadurch gekennzeichnet,**
**daß** die Vorrichtung zum Aufteilen des Volumens und/oder die Isolierungsschicht (13) zumindest teilweise aus einem metallischen oder einem keramischen Material hergestellt sind.

16. Vorrichtung nach Anspruch 15,
**dadurch gekennzeichnet,**
**daß** die Vorrichtung zum Aufteilen des Volumens und/oder die Isolierungsschicht (13) teilweise ein Absorbermaterial für Neutronenstrahlung aufweisen.

## Claims

1. A device for cooling a reactor pressure vessel (3),
- with a core support plate (11), which supports a reactor core (4) inside the reactor pressure vessel (3), and
- with a device (34, 41) for dividing the volume beneath the core support plate (11) into a plurality of sub-volumes,
- whereby the device for dividing the volume has an essentially cylindrical outer wall (10) and
- whereby the outer wall (10) has at least one opening (33) for the passage of a cooling agent,
- **characterised in that**
- the device for dividing the volume inside the outer wall (10) has a honeycomb insertion (34), which has essentially vertically running intermediate walls (35) forming chambers (31).

2. The device according to claim 1,
**characterised in that**
the outer wall (10) supports the core support plate (11) from beneath and is supported on the inner wall of the bottom spherical cap (30) of the reactor pressure vessel.

3. The device according to claim 1 or 2,
**characterised in that**
an inflow device (41) is provided at the lower end of the device for dividing the volume and splits up the cooling water in the inflow area into a plurality of sub-volumes.

4. The device according to claims 1 to 3,
**characterised in that**
the honeycomb insertion (34), in particular at the lower end, has passage openings for a cooling liquid.

5. The device according to claim 4,
**characterised in that**
the honeycomb insertion (34) has connection openings (14) in the intermediate walls (35), which are preferably arranged horizontally offset with respect to one another.

6. The device according to claim 4 or 5,
**characterised in that**
the chambers (31) of the honeycomb insertion (34) are filled at least partially with loose bodies (16).

7. A device for cooling a reactor pressure vessel (3),
- with a core support plate (11) which supports a reactor core (4) inside the reactor pressure vessel (3), and
- with a device (16) for dividing the volume beneath the core support plate (11) into a plurality of sub-volumes,
- whereby the device for dividing the volume has an essentially cylindrical outer wall (10) and
- whereby the outer wall (10) has at least one opening for the passage of a cooling agent,
- **characterised in that**
- the device for dividing the volume inside the outer wall (10) has plurality of loose bodies (16).

8. The device according to claim 7,
**characterised in that**
a latticed element (36) fixed at the lower end of the device for dividing the volume holds the loose bodies (16) at a distance from the inner wall of the bottom spherical cap (30).

9. The device according to claim 7 or 8,
**characterised in that**
the loose bodies (16) consist of a ceramic or metallic material and are preferably formed by spheres or as perforated polyhedrons.

10. The device according to any one claims 1 to 9,
**characterised in that**
an insulating layer (13) is arranged at least in the area beneath the core support plate (11) at the inner wall of the reactor pressure vessel (3).

11. The device according to claim 10,
**characterised in that**
the insulating layer (13) is arranged with a predetermined spacing from the inner wall of the reactor pressure vessel (3) and forms an essentially through-going flow gap (15).

12. The device according to claim 10 or 11,
**characterised in that**
the insulating layer (13) has openings and/or porous structures for the passage of a cooling liquid.

13. The device according to any one of claims 10 to 12,
**characterised in that**
the insulating layer (13) consists at least partially of a filling of loose bodies (16).

14. The device according to any one of claims 1 to 13,
**characterised in that**
the device for dividing the volume and/or the insulating layer (13) has an axial, radial or segment-like modular structure.

15. The device according to any one of claims 1 to 14,
**characterised in that**
the device for dividing the volume and/or the insulating layer (13) are produced at least partially from a metallic or a ceramic material.

16. The device according to claim 15,
**characterised in that**
the device for dividing the volume and/or the insulating layer (13) partially exhibit an absorber material for neutron radiation.

## Revendications

1. Dispositif pour refroidir le caisson sous pression (3) d'un réacteur, comportant
- une plaque (11) du support du coeur, qui porte le coeur (4) du réacteur à l'intérieur du caisson sous pression (3) du réacteur,
- un dispositif (34, 41) pour diviser le volume au-dessous de la plaque (11) de support du coeur, en une multiplicité de volumes partiels, et
- le dispositif servant à diviser le volume possédant une paroi extérieure essentiellement cylindrique (10),
- la paroi extérieure (10) possédant au moins une ouverture (33) pour le passage d'un milieu de refroidissement,
- **caractérisé en ce que**
- le dispositif servant à diviser le volume comporte à l'intérieur de la paroi extérieure (10) une structure en nids d'abeille (34), qui possède des parois intercalaires (35) qui s'étendent essentiellement verticalement et forment des chambres (31).

2. Dispositif selon la revendication 1, **caractérisé en ce que** la paroi extérieure (10) porte à partir du bas la plaque (11) de support du coeur et prend appui sur la paroi intérieure de la calotte (30) du fond du récipient sous pression du réacteur.

3. Dispositif selon la revendication 1 ou 2, **caractérisé en ce qu'**un dispositif d'entrée d'écoulement (41) est prévu à l'extrémité inférieure du dispositif servant à diviser le volume et **en ce que** l'eau de refroidissement est divisée dans la zone d'entrée d'écoulement en une multiplicité de volumes partiels.

4. Dispositif selon les revendications 1 à 3, **caractérisé en ce que** l'insert en nids d'abeille (34) comporte, notamment au niveau de l'extrémité inférieure, des ouvertures de passage pour un liquide de refroidissement.

5. Dispositif selon la revendication 4, **caractérisé en ce que** l'insert en forme de nids d'abeille (34) comporte des ouvertures de liaison (14) qui sont formées dans les fonds intercalaires et sont disposées en étant décalées les unes par rapport aux autres de préférence horizontalement.

6. Dispositif selon la revendication 4 ou 5, **caractérisé en ce que** les chambres (31) de l'insert en forme de nids d'abeille (34) sont remplies au moins partiellement par des corps en vrac (16).

7. Dispositif pour refroidir un caisson sous pression (3) d'un réacteur, comportant:
- une plaque (11) du support du coeur, qui porte le coeur (4) du réacteur à l'intérieur du caisson sous pression (3) du réacteur,
- un dispositif (34, 41) pour diviser le volume au-dessous de la plaque (11) de support du coeur, en une multiplicité de volumes partiels, et
- le dispositif servant à diviser le volume possédant une paroi extérieure essentiellement cylindrique (10),
- la paroi extérieure (10) possédant au moins une ouverture (33) pour le passage d'un milieu de refroidissement,
**caractérisé en ce que**
- le dispositif pour diviser le volume comporte, à l'intérieur de la paroi extérieure (10), une multiplicité de corps en vrac (16).

8. Dispositif selon la revendication 7, **caractérisé en ce qu'**un élément en forme de grille (36), qui est fixé à l'extrémité inférieure du dispositif pour diviser le volume, maintient les corps en vrac (16) à distance de la paroi intérieure de la calotte de fond (30).

9. Dispositif selon la revendication 7 ou 8, **caractérisé en ce que** les corps en vrac (16) sont constitués par un matériau céramique ou métallique et sont formés de préférence par des billes ou sous la forme de polyèdres traversés par un perçage.

10. Dispositif selon l'une des revendications 1 à 9, **caractérisé en ce qu'**une couche isolante (13) est disposée au moins dans une zone située au-dessous de la plaque (11) de support du noyau, sur la paroi intérieure du caisson sous pression (3) du réacteur.

11. Dispositif selon la revendication 10, **caractérisé en ce que** la couche isolante (13) est disposée à une distance prédéterminée de la paroi intérieure du caisson sous pression (3) du réacteur et forme une fente d'écoulement (15) qui est essentiellement passante (15).

12. Dispositif selon la revendication 10 ou 11, **caractérisé en ce que** la couche isolante (13) comporte des ouvertures et/ou des structures poreuses pour le passage d'un liquide de refroidissement.

13. Dispositif selon l'une des revendications 10 à 12, **caractérisé en ce que** la couche isolante (13) est constituée au moins en partie par une accumulation de corps en vrac (16).

14. Dispositif selon l'une des revendications 1 à 13, **caractérisé en ce que** le dispositif pour diviser le volume et/ou la couche isolante (13) possède une structure modulaire axiale, radiale ou en forme de segment.

15. Dispositif selon l'une des revendications 1 à 14, **caractérisé en ce que** le dispositif servant à diviser le volume et/ou la couche isolante (13) sont fabriqués au moins en partie en un matériau métallique ou un matériau céramique.

16. Dispositif selon la revendication 15, **caractérisé en ce que** le dispositif de division du volume et/ou la couche isolante (13) comporte en partie un matériau absorbant pour le rayonnement neutronique.
